# EUROPÄISCHE PATENTANMELDUNG

(11) **EP 2 016 823 A1**
(43) Veröffentlichungstag der Anmeldung: **21.01.2009**
(21) Anmeldenummer: 08011048.9
(22) Anmeldetag: 18.06.2008
(51) Int. Cl.: A01M 1/20

(54) **Verfahren zur Abwehr von Schaben und Vorrichtung zur Durchführung des Verfahrens**

(30) Priorität: 17.07.2007 DE 102007033284
(71) Anmelder: Mahmoudi, Sari Maria, 19767 Teheran (IR)
(72) Erfinder: Mahmoudi, Sari Maria, 19767 Teheran (IR)
(74) Vertreter: Tiesmeyer, Johannes

(57) **Zusammenfassung**

Die Erfindung betrifft ein Verfahren zur Abwehr von Schaben in einem Raum. Dabei wird erfindungsgemäß vorgeschlagen, dass das Verfahren die folgenden Schritte umfasst:
a) wenigstens zeitweises Einstellen der Raumtemperatur auf einen Temperaturwert, bei dem Schaben inaktiv sind oder den Raum meiden, oder/und
b) wenigstens zeitweises Einstellen der relativen Luftfeuchtigkeit in dem Raum auf einen Feuchtigkeitswert, bei dem Schaben inaktiv sind oder den Raum meiden,
gegebenenfalls Wiederholen der Schritte a) oder/und b), um einen Schabenbefall des Raumes während der Aktivzeit der Schaben zu verhindern oder um die Entfernung eines bestehenden Schabenbefalls wenigstens zu unterstützen. Ferner betrifft die Erfindung eine Vorrichtung zur Durchführung des erfindungsgemäßen Verfahrens.

## Beschreibung

Die vorliegende Erfindung betrifft ein Verfahren zur Abwehr von Schaben in einem Raum sowie eine Vorrichtung zur Durchführung dieses Verfahrens.

Schaben (Blattodea), zu denen auch die deutsche Schabe (Blattella germanica) und die gemeine Küchenschabe (Blatta orientalis, auch bekannt als Kakerlake) zählen, sind als Vorratsschädling und als Träger von Krankheitserregern bekannt, die auch beim Menschen gesundheitliche Schäden verursachen können. Diese Schaben, insbesondere die gemeine Küchenschabe, sind weltweit verbreitet und auch auf abgelegenen Inseln anzutreffen. Die einzige Ausnahme bilden die polaren Gebiete der Arktis und Antarktis, an denen es für die Schaben zu kalt ist.

Schaben sind nachtaktive Insekten und kommen häufig in Gaststätten, Großküchen, Hotelbetrieben, Krankenhäusern, aber auch in Wohnungen vor. Dabei liegt der Befallsschwerpunkt häufig in Küchen oder Räumen, in denen Lebensmittel verarbeitet werden. Allerdings werden auch Badezimmer und Wäschereien wegen der höheren Temperatur und Feuchte ebenfalls gern von Schaben besiedelt und können bei ihrer Verbreitung insbesondere in Krankenhäusern eine wichtige Rolle spielen. Ferner gibt es auch in zoologischen Gärten und Zoohandlungen aufgrund der dort herrschenden hohen Temperaturen ebenfalls häufig Schabenprobleme. Auch moderne Einkaufszentren sind wegen der Wärme, des vielfältigen Nahrungsangebotes und der zahlreichen Versteckmöglichkeiten besonders gefährdet. Schließlich können auch Viehställe, insbesondere Schweineställe in landwirtschaftlichen Betrieben von Schaben besiedelt werden.

Normalerweise überleben Schaben im Freien nur unter günstigen warmen Bedingungen, insbesondere an Orten, an denen die Temperatur mehr als 20°C beträgt. Ferner ist für das Überleben auch ein ausreichendes Nahrungs- und Feuchtigkeitsangebot notwendig.

Als Räume, in denen Schaben vorgefunden werden können, werden bevorzugt Bereiche, deren Temperatur mehr als 20°C beträgt, in der Nähe einer Nahrungs- und einer Feuchtigkeitsquelle ausgemacht, insbesondere finden sich Schaben im Wohnbereich hinter Waschbecken, Küchenschränken, Wärmeaustauschern von Kühlschränken oder in elektrischen Geräten. Ferner werden Schaben auch regelmäßig hinter Scheuerleisten, Türrahmen, defekten Fliesen, Mauerfugen, Bildern und Spiegeln gefunden.

Als ideale Verstecke dienen auch Schächte mit Warmwasser-, Abfluss- und Heizungsrohren, Fernheizungen und Müllschluckeranlagen. Dabei dienen diese Verstecke gleichzeitig auch der Verbreitung der Schaben, da solche Leitungs- bzw. Kanalsysteme ein weitverzweigtes Netz bilden, in dem sich die Schaben in der Regel ungehindert ausbreiten können.

Schaben sind bei Temperaturen unter 4°C nicht mehr aktiv und die obere Temperaturgrenze für Aktivität liegt bei etwa 42°C.

Die oben beschriebenen Schabenarten sind in der Regel Allesfresser, wobei sie als unspezialisierte Arten auf energetisch leicht aufschließbare Materialien angewiesen sind. Die hervorgerufenen Fraßschäden an Lebensmitteln und Vorräten, aber auch an Leder, Textilien und Papier, sind in der Regel gering. Allerdings stellt die Kontamination der Nahrungsmittel mit Kot, Kropfinhalt oder Ausscheidungen aus Speicheldrüsen ein ernstzunehmendes Gesundheitsrisiko dar. Ferner ist die Schabe auch als Überträger von Krankheiten bekannt, insbesondere von Milzbrand, Salmonellen und Tuberkulose. Auch können Allergene, die von Schaben stammen, Asthmasymptome in stärkerem Maße hervorrufen als andere bekannte Auslöser.

Bei der Bekämpfung von Schaben ist es wichtig, den Schabenbefall rechtzeitig zu entdecken. Hierzu werden Detektoren in Form von Klebefallen mit entsprechenden Lockstoffen verwendet.

Um gegen einen Schabenbefall vorzugehen, werden normalerweise Fraßköder ausgebracht oder befallene Räume werden mit Sprays behandelt. Bevorzugt wird die Köderauslegung mit Fraßgiften, da dies die wenigsten Risiken für die Umwelt birgt. Chemische Bekämpfung von Schabenbefall ist für Bewohner eines betroffenen Gebäudes in der Regel gesundheitsschädlich und führt dazu, dass ein Zimmer bzw. Gebäude über einen längeren Zeitraum nicht bewohnbar ist.

Demgegenüber soll mit dem erfindungsgemäßen Verfahren eine diese konventionellen Abwehrtechniken ergänzende oder ggf. ersetzende Abwehr von Schaben ermöglicht werden.

Erfindungsgemäß wird vorgeschlagen, dass das Verfahren zur Abwehr von Schaben in einem Raum folgende Schritte umfasst:
a) wenigstens zeitweises Einstellen der Raumtemperatur auf einen Temperaturwert, bei dem Schaben inaktiv sind oder den Raum meiden, oder/und
b) wenigstens zeitweises Einstellen der relativen Luftfeuchtigkeit in dem Raum auf einen Feuchtigkeitswert, bei dem Schaben inaktiv sind oder den Raum meiden,
   gegebenenfalls Wiederholen der Schritte a) oder/und b), um einen Schabenbefall des Raumes während der Aktivzeit der Schaben zu verhindern oder um die Entfernung eines bestehenden Schabenbefalls wenigstens zu unterstützen.

Das Abwehrverfahren beruht somit auf der Veränderung von klimatischen Bedingungen, die von Schaben im Normalfall gemieden werden. Dabei ist besonders hervorzuheben, dass ein solches Verfahren auch den Erstbefall mit Schaben wirkungsvoll verhindern kann, wenn Räume, die anfällig für Schabenbefall sind, gemäß dem beschriebenen Verfahren zeitweise entsprechend klimatisiert werden.

Vorzugsweise soll die Temperatur beim Abwehrverfahren auf einen Wert unter 20°C abgesenkt werden, insbesondere unter 10°C, oder die Temperatur soll auf einen Wert über 42°C angehoben werden. Da sich Schaben, wie bereits einleitend erwähnt, insbesondere bei Temperaturen über 20°C besonders wohlfühlen, soll zu deren Abwehr die Temperatur unter diese Grenze abgesenkt werden. Es ist insbesondere auch denkbar, die Temperatur bis auf 0°C bis 4°C abzusenken, bei der die Schaben sicher inaktiv sind. Bei Temperaturen über 4°C, aber unter 20°C wird beim vorliegenden Verfahren davon ausgegangen, dass die Schaben derart abgekühlte Räume eher meiden. Alternativ ist es auch denkbar, einen Raum auf über 42°C zu erwärmen, so dass die Inaktivität von Schaben ebenfalls erreicht werden kann.

Es wird vorgeschlagen, dass die relative Luftfeuchtigkeit im Raum auf einen Wert unter 50%, vorzugsweise unter 40%, abgesenkt wird, wobei dies in der Regel mit einer oben erwähnten Temperaturänderung kombiniert wird. Beispielsweise konnte beobachtet werden, dass Schaben bei einer Raumtemperatur von 18°C und einer Luftfeuchtigkeit von 40% nicht mehr im Raum vorhanden waren.

Da Schaben nachtaktive Insekten sind, die das Tageslicht meiden, wird weiterbildend vorgeschlagen, dass die oben genannten Schritte a) und b) täglich durchgeführt werden während Tageszeiten, in denen es dunkel ist. Denkbar ist es auch, die Schritte in Übergangszeiten zwischen hellen und dunklen Tageszeiten durchzuführen, also während der Dämmerung, um im Raum bereits bei beginnender Aktivität bzw. vor Beginn der Schabenaktivität ein entsprechendes Schaben abwehrendes Klima zu erzeugen.

Zur Unterstützung der Entfernung bzw. zur Entfernung eines Schabenbefalls ist es auch denkbar, die genannten Schritte a) oder/und b) während des ganzen Tages, insbesondere auch über eine Zeitdauer von mehreren Tagen, ununterbrochen durchzuführen. Dabei ist es durchaus denkbar, das Abwehrverfahren durch Klimatisierung mit anderen bekannten Bekämpfungsverfahren zu kombinieren, um eine möglichst umfassende Schabenbekämpfung zu ermöglichen.

Es ist noch anzufügen, dass das zeitweise Einstellen der Raumtemperatur bzw. der relativen Luftfeuchtigkeit auf die entsprechenden Schaben abwehrenden Werte auch intervallmäßig während einer Aktivzeit der Schaben durchgeführt werden kann oder dass die Einstellung der gewünschten klimatischen Bedingungen dauerhaft während der Aktivzeit der Schaben beibehalten wird.

Der Raum, in dem das Abwehrverfahren angewendet werden soll, kann ein Zimmer in einem Gebäude, insbesondere ein Badezimmer, eine Küche oder ein Keller, sein oder er kann ein Teil eines solchen Zimmers, insbesondere ein zwischen im Zimmer enthaltenem Mobiliar und Wänden gebildeter Raum sein oder er kann ein Kanal, insbesondere Abwasserkanal, Lüftungskanal oder Versorgungsleitungskanal, sein. Sofern Kellerbereiche eines Gebäudes trocken und kühl gehalten werden, wird den Schaben das Eindringen in ein Gebäude erschwert und ein Befall vom Keller her in den oberen Stockwerken ist nahezu ausgeschlossen.

In diesem Zusammenhang wird vorgeschlagen, dass in einem mit dem Zimmer, insbesondere Küche, Badezimmer oder Keller verbundenen Kanal eine Klimazone geschaffen wird, derart, dass durch die im Kanal eingestellten klimatischen Bedinungen der Kanal als Zugangsweg zum Zimmer bzw. zum Gebäude von den Schaben gemieden wird. Besonders bevorzugt kann die Klimazone in einem Abwasserkanal oder/und einem Lüftungskanal oder/und einem Versorgungsleitungskanal geschaffen werden, wobei vorgeschlagen wird, dass die Klimazone in einem beschränkten Bereich des betreffenden Kanals hergestellt wird, insbesondere auf einer bestimmten Länge des Kanals. Dabei soll der beschränkte Bereich bzw. die Länge derart gewählt werden, dass in die Klimazone geratene Schaben nicht durch die Klimazone hindurchgehen, sondern zur Umkehr veranlasst werden.

Durch diese Maßnahmen soll eine Art Klimabarriere in möglichen Zugängen für Schaben geschaffen werden, die von den Insekten im Normalfall nicht überwunden werden. Es wird beispielsweise daran gedacht, dass in Abwasserrohren, die aufgrund des Feuchtigkeits- und Nahrungsangebots gerne als Verbreitungswege für Schaben dienen, auf wenigstens einem Abschnitt dieses Abflussrohres zwischen einer Küche bzw. einem Badezimmer bzw. einem gesamten Haus und der abführenden Abwasserkanalleitung in der Straße entsprechende Klimazonen geschaffen werden. Dabei wird davon ausgegangen, dass bei abfließendem Abwasser ein Schabenbefall entgegen der Fließrichtung des Abwassers nicht möglich ist und dass nach Durchfließen des Abwassers durch die Klimazone relativ schnell das gewünschte Abwehrklima im Abwasserrohr wiederhergestellt werden kann. Werden beispielsweise in einem Mietshaus über die gesamte Länge der Abwasserleitungen mehrere solche Klimazonen eingerichtet, könnten die jeweils an dem Abwasserrohr angeschlossenen einzelnen Wohnungen wirkungsvoll vor Schabenbefall geschützt werden.

Wie bereits erwähnt, ist das Schaffen von solchen Klimazonen nicht auf das Beispiel von Abwasserrohren bzw. -kanälen in einem Haus beschränkt, sondern es können alle Arten von Leitungen bzw. Hohlräumen mit darin verlegten Leitungen zur Schaffung von derartigen Klimazonen verwendet werden. Insbesondere wird auch an Lüftungsrohre von Gebäudeklimatisierungsanlagen gedacht oder an Kanäle, in denen Wasserversorgungsleitungen oder elektrische Leitungen in einem Haus verlegt sind.

Zur Durchführung des zuvor beschriebenen Verfahrens wird erfindungsgemäß eine Vorrichtung zur Abwehr von Schaben vorgeschlagen, umfassend ein Klimaaggregat, das derart programmiert ist, dass es die Temperatur und die relative Luftfeuchtigkeit in einem Raum auf Werte absenkt, bei denen Schaben inaktiv sind oder den Raum meiden, und eine das Klimaaggregat versorgende Energiequelle, vorzugsweise elektrische Stromquelle.

Vorzugsweise weist die Vorrichtung als Energiequelle einen Akkumulator auf, der wahlweise in ein Stromversorgungsnetz oder über eine zur Vorrichtung zugehörige Solarstromanlage aufladbar ist. Eine derartige Ausgestaltung ermöglicht den Einsatz einer solchen Klimatisierungsvorrichtung auch an Orten ohne Stromanschluss, an denen aber der Schabenbefall aufgrund der klimatischen und hygienischen Verhältnisse ein Problem darstellt.

Weiterbildend wird vorgeschlagen, dass die Vorrichtung eine Steuereinheit umfasst, über welche die im Raum zu erreichende Temperatur und Luftfeuchtigkeit einstellbar sind. Um eine Automatisierung des Verfahrens zu ermöglichen, kann die Steuereinheit ferner eine Zeitschaltuhr umfassen, über die ein automatischer Betrieb, insbesondere das zeitgesteuerte Ein- und Ausschalten der Vorrichtung einstellbar ist.

Zur Erfassung der Temperatur oder/und um die relative Luftfeuchtigkeit im klimatisierten Raum zu messen und um entsprechende Messsignale an die Steuereinheit abzugeben, wird vorgeschlagen, dass die Vorrichtung entsprechende Sensoren umfasst. Dabei soll das Klimaaggregat von der Steuereinheit derart angesteuert werden, dass die gewünschte Klimatisierung im Raum erreicht wird durch eine entsprechende Rückkopplung aufgrund der erfassten Messsignale.

Um den automatisierten Betrieb weiter zu unterstützen, kann die Vorrichtung auch einen Dämmerungssensor umfassen, der die Helligkeit im Raum oder/und der Umgebung des Raums erfasst und in Abhängigkeit von der erfassten Helligkeit ein Messsignal zum Einschalten bzw. Ausschalten der Vorrichtung an die Steuereinheit abgibt.

Um mit einer derartigen Vorrichtung auch die oben angesprochenen Klimazonen in kleinen Räumen, wie beispielsweise Zwischenräumen zwischen Mobiliar und Wänden oder Abwasserkanälen, Lüftungskanälen oder Versorgungsleitungskanälen herzustellen, wird vorgeschlagen, dass die Vorrichtung derart eingerichtet ist, dass sie die gewünschte Temperatur oder/und Luftfeuchtigkeit auch in schwer zugänglichen Räumen herstellen kann, wobei sie hierzu vorzugsweise wenigstens eine an ihr anschließbare, schlauchartige Belüftungseinrichtung umfasst. Durch eine derartige Ausgestaltung ist es möglich, die Vorrichtung beispielsweise in einem Zimmer eines Gebäudes aufzustellen, aber die Klimatisierung in einem entfernten Raum vorzunehmen, in dem die Vorrichtung nicht aufgestellt werden kann oder der schwer zugänglich ist. Selbstverständlich ist es bei einer derartigen Ausführung der Vorrichtung auch denkbar, an der Belüftungseinrichtung entsprechende Signalkabel anzubringen, um eine Verbindung zwischen am im Raum befindlichen Ende der Belüftungseinrichtung angebrachten Sensoren und der Steuereinheit herstellen zu können.

Bevorzugt ist die Vorrichtung derart ausgeführt, dass sie zwischen wenigstens zwei Betriebsmodi umschaltbar ist, nämlich einem ersten Betriebsmodus für die Klimatisierung eines gesamten Zimmers eines Gebäudes und einem zweiten Betriebsmodus für die Klimatisierung eines kleinen Raums unter Verwendung der schlauchartigen Belüftungseinrichtung. Gegebenenfalls kann in diesem Zusammenhang auch daran gedacht werden, an eine solche Vorrichtung mehrere schlauchartige Belüftungseinrichtungen anzuschließen, so dass entweder mehrere Räume damit klimatisiert werden können oder dass ein Raum durch mehrere Belüftungseinrichtungen effektiver klimatisiert werden kann.

Das vorgestellte Verfahren zur Abwehr von Schaben und die Vorrichtung zur Durchführung dieses Verfahrens ermöglichen das Vermeiden von Schabenbefall auf eine ökologische Art und Weise. Insbesondere kann der Einsatz von Chemikalien vermieden werden. Das Verfahren stellt insbesondere eine Präventivmaßnahme dar und kann insbesondere bei Ausstattung der Klimatisierungsvorrichtung mit einem Akkumulator und einer Solarstromanlage (Solarzellen) von einem Stromnetz autark und Ressourcen sparend durchgeführt werden.

## Patentansprüche

1. Verfahren zur Abwehr von Schaben in einem Raum, umfassend die Schritte:
a) wenigstens zeitweises Einstellen der Raumtemperatur auf einen Temperaturwert, bei dem Schaben inaktiv sind oder den Raum meiden, oder/und
b) wenigstens zeitweises Einstellen der relativen Luftfeuchtigkeit in dem Raum auf einen Feuchtigkeitswert, bei dem Schaben inaktiv sind oder den Raum meiden,
gegebenenfalls Wiederholen der Schritte a) oder/und b), um einen Schabenbefall des Raumes während der Aktivzeit der Schaben zu verhindern oder um die Entfernung eines bestehenden Schabenbefalls wenigstens zu unterstützen.

2. Verfahren nach Anspruch 1, **dadurch gekennzeichnet, dass** die Temperatur auf einen Wert unter 20°C abgesenkt wird, vorzugsweise unter 10°C oder dass die Temperatur auf einen Wert über 42°C angehoben wird.

3. Verfahren nach Anspruch 1 oder 2, **dadurch gekennzeichnet, dass** die relative Feuchtigkeit auf einen Wert unter 50%, vorzugsweise unter 40% abgesenkt wird.

4. Verfahren nach einem der Ansprüche 1 bis 3, **dadurch gekennzeichnet, dass** die Schritte a) oder/und b) täglich durchgeführt werden während Tageszeiten, in denen es dunkel ist.

5. Verfahren nach Anspruch 4, **dadurch gekennzeichnet, dass** die Schritte a) oder/und b) auch in Übergangszeiten zwischen hellen und dunklen Tageszeiten durchgeführt werden.

6. Verfahren nach Anspruch 4 oder 5, **dadurch gekennzeichnet, dass** zur Unterstützung der Entfernung bzw. zur Entfernung eines Schabenbefalls die Schritte a) oder/und b) während des ganzen Tages, insbesondere über eine Zeitdauer von mehreren Tagen ununterbrochen durchgeführt werden.

7. Verfahren nach einem der vorhergehenden Ansprüche, **dadurch gekennzeichnet, dass** der Raum ein Zimmer in einem Gebäude, insbesondere ein Badezimmer, eine Küche oder ein Keller ist oder ein Teil eines solchen Zimmers, insbesondere ein zwischen im Zimmer enthaltenem Mobiliar und Wänden gebildeter Raum ist, oder ein Kanal, insbesondere Abwasserkanal, Lüftungskanal oder Versorgungsleitungskanal ist.

8. Verfahren nach Anspruch 7, **dadurch gekennzeichnet, dass** in einem mit dem Zimmer, insbesondere Küche, Badezimmer oder Keller verbundenen Kanal eine Klimazone geschaffen wird, derart, dass durch die im Kanal eingestellten klimatischen Bedinungen der Kanal als Zugangsweg zum Zimmer bzw. zum Gebäude von den Schaben gemieden wird.

9. Verfahren nach Anspruch 8, **dadurch gekennzeichnet, dass** die Klimazone in einem Abwasserkanal oder/und einem Lüftungskanal oder/und einem Versorgungsleitungskanal geschaffen wird.

10. Verfahren nach Anspruch 9, **dadurch gekennzeichnet, dass** die Klimazone in einem beschränkten Bereich des betreffenden Kanals hergestellt wird, insbesondere auf einer bestimmten Länge des Kanals.

11. Verfahren nach Anspruch 10, **dadurch gekennzeichnet, dass** der beschränkte Bereich bzw. die Länge derart gewählt wird, dass in die Klimazone geratene Schaben nicht durch die Klimazone hindurchgehen, sondern zur Umkehr veranlasst werden.

12. Vorrichtung zur Abwehr von Schaben gemäß dem Verfahren nach einem der Ansprüche 1 bis 11, umfassend
ein Klimaaggregat, das derart programmiert ist, dass es die Temperatur und die relative Luftfeuchtigkeit in einem Raum auf Werte absenkt, bei denen Schaben inaktiv sind oder den Raum meiden, und eine das Klimaaggregat versorgende Energiequelle, vorzugsweise elektrische Stromquelle.

13. Vorrichtung nach Anspruch 12, **dadurch gekennzeichnet, dass** sie als Energiequelle einen Akkumulator umfasst, der wahlweise über ein Stromversorgungsnetz oder über eine zur Vorrichtung zugehörige Solarstromanlage aufladbar ist.

14. Vorrichtung nach Anspruch 12 oder 13, **dadurch gekennzeichnet, dass** sie eine Steuereinheit umfasst, über welche die im Raum zu erreichende Temperatur und Luftfeuchtigkeit einstellbar sind.

15. Vorrichtung nach Anspruch 14, **dadurch gekennzeichnet, dass** die Steuereinheit ferner eine Zeitschaltuhr umfasst, über die ein automatischer Betrieb, insbesondere das zeitgesteuerte Ein- und Ausschalten der Vorrichtung einstellbar ist.

16. Vorrichtung nach Anspruch 14 oder 15, **dadurch gekennzeichnet, dass** die Vorrichtung ferner Sensoren umfasst, welche die Temperatur oder/und die relative Luftfeuchtigkeit im Raum messen und entsprechende Messsignale an die Steuereinheit abgeben.

17. Vorrichtung nach einem der Ansprüche 14 bis 16, **dadurch gekennzeichnet, dass** die Vorrichtung einen Dämmerungssensor umfasst, der die Helligkeit im Raum oder/und der Umgebung des Raums erfasst und in Abhängikeit von der erfassten Helligkeit ein Messignal zum Einschalten bzw. Ausschalten der Vorrichtung an die Steuereinheit abgibt.

18. Vorrichtung nach einem der Ansprüche 12 bis 17, **dadurch gekennzeichnet, dass** sie derart eingerichtet ist, dass sie die gewünschte Temperatur und Luftfeuchtigkeit auch in schwer zugänglichen Räumen, insbesondere Wandkanälen, Zwischenräumen zwischen Mobiliar und Zimmerwänden und dergleichen herstellen kann, wobei sie hierzu vorzugsweise wenigstens eine an ihr anschließbare, schlauchartige Belüftungseinrichtung umfasst.

19. Vorrichtung nach Anspruch 18, **dadurch gekennzeichnet, dass** die Vorrichtung zwischen wenigstens zwei Betriebsmodi umschaltbar ist, einem ersten Betriebsmodus für die Klimatisierung eines gesamten Zimmers eines Gebäudes und einem zweiten Betriebsmodus für die Klimatisierung eines kleinen Raums unter Verwendung der schlauchartigen Belüftungseinrichtung.
